# EUROPEAN PATENT APPLICATION

(11) **EP 4 459 402 A1**
(43) Date of publication of application: **06.11.2024**
(21) Application number: 22914843.2
(22) Date of filing: 27.12.2022
(51) Int. Cl.: G05B 23/02

(54) **REMOTE DIAGNOSIS METHOD, APPARATUS AND SYSTEM, AND ELECTRONIC DEVICE AND STORAGE MEDIUM**

(30) Priority: 31.12.2021 CN 202111670425
(71) Applicant: Beijing Co Wheels Technology Co., Ltd, Beijing 101300 (CN)
(72) Inventor: YANG, Ting, Beijing 101300 (CN)
(74) Representative: advotec.
(86) International application number: PCT/CN2022/142556
(87) International publication number: WO 2023/125591

(57) **Abstract**

Disclosed are a remote diagnosis method, apparatus and system, and an electronic device, a storage medium, a computer program product and a computer program. The remote diagnosis method comprises: receiving a remote control instruction sent by a server, wherein the remote control instruction corresponds to a diagnosis category, and is used for instructing a vehicle to be diagnosed to execute a target test script corresponding to the remote control instruction; executing the target test script on the basis of a preset diagnosis engine; performing diagnosis on an execution result of the target test script on the basis of the preset diagnosis engine; and reporting a diagnosis result of the target test script to the server.

## Description

### CROSS REFERENCE TO RELATED APPLICATIONS

This application claims priority to Chinese patent application No. 202111670425.X, filed on December 31, 2021, the entire content of which is incorporated herein by reference.

### TECHNICAL FIELD

The disclosure relates to the field of vehicle technology, in particular to a remote diagnosis method, a remote diagnosis apparatus, a system, an electronic device, a storage medium, a computer program product and a computer program.

### BACKGROUND

The traditional automotive aftersales diagnostic instrument takes a diagnostic computer as the core, an aftersales diagnostic agent of the automobile aftersales diagnostic instrument is provided on the computer of an aftersales diagnostic equipment, and a vehicle itself is an object to be repaired. During vehicle maintenance, the traditional diagnostic instrument needs to be at the same site as the vehicle to be repaired, so that it is connected to the vehicle through On Board Diagnostics (OBD) wires to achieve vehicle maintenance. In the maintenance scenario of the traditional aftersales diagnostic instrument, the vehicle is repaired using the diagnostic instrument at a maintenance site designated by an Original Equipment Manufacturer (OEM). Therefore, it takes a long waiting time for customer vehicle maintenance in this application scenario, and user aftersales experience is poor.

### SUMMARY

Embodiments of the disclosure provide a remote diagnosis method, a remote diagnosis apparatus, an electronic device, a storage medium, a computer program product and a computer program.

According to a first aspect of embodiments of the disclosure, a remote diagnosis method, applied to a side of vehicle to be diagnosed, is provided. The method includes:
receiving a remote control instruction sent by a server, in which the remote control instruction corresponds to a diagnosis category, and the remote control instruction is configured to instruct the vehicle to be diagnosed to execute a target test script corresponding to the remote control instruction;
executing the target test script based on a preset diagnostic agent;
diagnosing an execution result of the target test script based on the preset diagnostic agent; and
reporting a diagnostic result of the target test script to the server.

In some embodiments, receiving the remote control instruction sent by the server includes:
receiving the remote control instruction sent, in response to a remote diagnosis request of the vehicle to be diagnosed, by the server;
   or,
receiving the remote control instruction sent, based on vehicle status data of the vehicle to be diagnosed, by the server.

In some embodiments, the server includes an offline server and a cloud server; and
receiving the remote control instruction sent, in response to the remote diagnosis request of the vehicle to be diagnosed, by the server includes:
after the offline server performs an electricity inspection on the vehicle to be diagnosed, sending the remote diagnosis request to the cloud server based on an electricity inspection result by the offline server; and
receiving the remote control instruction sent by the cloud server.

In some embodiments, the server includes: an aftersales server and a cloud server, and
receiving the remote control instruction sent, based on the vehicle status data of the vehicle to be diagnosed, by the server includes:
receiving the remote control instruction issued through a preset interface of the cloud server called by the aftersales server, in which the aftersales server is configured to diagnose the vehicle to be diagnosed based on a preset condition in accordance with vehicle data of the vehicle to be diagnosed.

In some embodiments, executing the target test script based on the preset diagnostic agent includes:
analyzing the target test script to determine a diagnosis equipment corresponding to the diagnosis category and a corresponding test script execution sequence, in which the test script execution sequence includes operations to be performed by test steps, and the diagnosis equipment is an equipment included in the vehicle; and
calling a preset interface corresponding to the diagnosis equipment to transmit the test script execution sequence to the diagnosis equipment, to enable the diagnosis equipment to execute the test script execution sequence based on the operations to be performed by the test steps.

In some embodiments, before executing the target test script based on the preset diagnostic agent, the method further includes:
receiving condition information, configured and sent by the server, on executing test scripts, in which the condition information includes status information items, that need to be inspected, of the vehicle to be diagnosed; and
determining that the status information items of the vehicle to be diagnosed satisfy the condition information.

In some embodiments, diagnosing the execution result of the target test script based on the preset diagnostic engine includes:
calling a diagnostic database, in which the diagnostic database includes a correspondence between a respective signaling variable generated by executing each test step of the test script and a diagnostic fault; and
analyzing the respective signaling variable generated by executing each test step based on the diagnostic database, and determining a diagnostic fault for the target test script based on the correspondence.

In some embodiments, reporting the diagnostic result of the target test script to the server includes:
generating a reporting configuration file based on the diagnostic result, in which the diagnostic result includes at least one of information on an execution process of the test script, information on a record file of execution process data of the test script, or information on an execution result of the test script; and
uploading the reporting configuration file to the server.

According to a second aspect of embodiments of the disclosure, a remote diagnosis method, applied to a first server side, is provided. The method includes:
receiving a remote diagnosis request, in which the remote diagnosis request includes a vehicle to be diagnosed and diagnosis information of the vehicle to be diagnosed by a second server;
sending a remote control instruction to the vehicle to be diagnosed based on the remote diagnosis request, in which the remote control instruction is configured to instruct the vehicle to be diagnosed to perform a corresponding diagnosis; and
receiving a diagnostic result sent by the vehicle to be diagnosed.

In some embodiments, the first server includes an offline server and an aftersales server; and
receiving the remote diagnosis request includes:
receiving the remote diagnosis request sent, based on an electricity inspection result of the vehicle to be diagnosed, by the offline server;
   or,
receiving the remote diagnosis request triggered by calling a preset interface by the aftersales server, in which the aftersales server is configured to diagnose the vehicle to be diagnosed based on a preset condition in accordance with vehicle data of the vehicle to be diagnosed.

In some embodiments, before sending the remote control instruction to the vehicle to be diagnosed based on the remote diagnosis request, the method further includes:
generating a test script execution sequence;
determining a diagnosis category to which the test script execution sequence belongs;
generating the test script based on the diagnosis category and the corresponding test script execution sequence; and
storing the test script in a test script collection to remotely synchronize the test script to the vehicle to be diagnosed.

In some embodiments, the first server also includes a diagnostic database, and the diagnostic database includes a correspondence between each signal variable generated by each test step and a respective diagnostic fault, and the method further includes:
monitoring whether there is an update in the diagnostic database; and
in response to monitoring that there is an update, sending an updated diagnostic database to a preset diagnostic engine in the vehicle to be diagnosed, to enable the preset diagnostic engine to diagnose, based on the updated diagnostic database, an execution result of the test script.

In some embodiments, before sending the remote control instruction to the vehicle to be diagnosed based on the remote diagnosis request, the method further includes:
configuring condition information on testing the vehicle to be diagnosed, and sending the condition information to the vehicle to be diagnosed, in which the condition information includes status information items, that need to be inspected, of the vehicle to be diagnosed; and
based on receiving a response that the vehicle to be diagnosed does not satisfy the condition information, reconfiguring the condition information until the vehicle to be diagnosed satisfies the condition information.

According to a third aspect of embodiments of the disclosure, a remote diagnosis apparatus, applied to a side of vehicle to be diagnosed, is provided. The apparatus includes:
a first receiving unit, configured to receive a remote control instruction sent by a server, in which the remote control instruction corresponds to a diagnosis category, and the remote control instruction is configured to instruct the vehicle to be diagnosed to execute a target test script corresponding to the remote control instruction;
an executing unit, configured to execute the target test script based on a preset diagnostic engine;
a diagnosing unit, configured to diagnose an execution result of the target test script based on the preset diagnostic engine; and
a reporting unit, configured to report a diagnostic result of the target test script to the server.

In some embodiments, the first receiving unit includes:
a first receiving module, configured to receive the remote instruction sent, in response to a remote diagnosis request of the vehicle to be diagnosed, by the server; and
a second receiving module, configured to receive the remote control instruction sent by the server according to vehicle status data of the vehicle to be diagnosed.

In some embodiments, the server includes an offline server and a cloud server; and
the first receiving module is further configured to:
after the offline performs an electricity inspection on the vehicle to be diagnosed, send the remote diagnosis request to the cloud server based on an electricity inspection result from the offline server, and receive the remote control instruction sent by the cloud server.

In some embodiments, the server includes an aftersales server and a cloud server; and
the second receiving module is further configured to:
receive the remote control instruction issued by the aftersales server through a preset interface of the cloud server called by the aftersales server, in which the aftersales server is configured to diagnose the vehicle to be diagnosed based on a preset condition in accordance with vehicle data of the vehicle to be diagnosed.

In some embodiments, the executing unit includes:
an analyzing module, configured to analyze the target test script;
a determining module, configured to determine a diagnosis equipment corresponding to the diagnosis category and a corresponding test script execution sequence, in which the test script execution sequence includes operations to be performed by test steps, and the diagnosis equipment is an equipment included in the vehicle; and
a calling module, configured to call a preset interface corresponding to the diagnosis equipment to transmit the test script execution sequence to the diagnosis equipment, to enable the diagnosis equipment to execute the test script execution sequence based on the operations to be performed by the test steps.

In some embodiments, the remote diagnosis apparatus further includes:
a second receiving unit, configured to, before executing the target test script based on the preset diagnostic engine, receive condition information on executing the test script configured and sent by the server, in which the condition information includes status information items, that need to be inspected, in the vehicle to be diagnosed; and
a determining unit, configured to determine that the status information items in the vehicle to be diagnosed satisfy the condition information.

In some embodiments, diagnosing the execution result of the target test script based on the preset diagnostic engine includes:
calling a diagnostic database, in which the diagnostic database includes a correspondence between each signaling variable generated by executing each test step of the test script and a respective diagnostic fault; and
analyzing each signaling variable generated by executing each test step based on the diagnostic database, and determining a diagnostic fault of the target test script based on the correspondence.

In some embodiments, the reporting unit includes:
a generating module, configured to generate a reporting configuration file based on the diagnostic result, in which the diagnostic result includes at least one of information on an execution process of the test script, information on a record file of execution process data of the test script, or information on an execution result of the test script; and
an uploading module, configured to upload the reporting configuration file to the server.

According to a fourth aspect of embodiments of the disclosure, a remote diagnosis apparatus, applied to a first server side, is provided. The apparatus includes:
a first receiving unit, configured to receive a remote diagnosis request, in which the remote diagnosis request includes a vehicle to be diagnosed and diagnosis information of the vehicle to be diagnosed by a second server;
a first sending unit, configured to send a remote control instruction to the vehicle to be diagnosed based on the remote diagnosis request, in which the remote control instruction is configured to instruct the vehicle to be diagnosed to perform a corresponding diagnosis; and
a second receiving unit, configured to receive a diagnostic result sent by the vehicle to be diagnosed.

In some embodiments, the first server includes an offline server and an aftersales server; and
the first receiving unit includes:
a first receiving module, configured to receive the remote diagnosis request sent by the offline server based on an electricity inspection result of the vehicle to be diagnosed; and
a second receiving module, configured to receive the remote diagnosis request triggered by the aftersales server by calling a preset interface, in which the aftersales server is configured to diagnose the vehicle to be diagnosed based on a preset condition in accordance with vehicle data of the vehicle to be diagnosed.

In some embodiments, the remote diagnosis apparatus further includes:
a first generating unit, configured to generate a test script execution sequence before sending, by the first sending unit based on the remote diagnosis request, the remote control instruction to the vehicle to be diagnosed;
a classification unit, configured to determine a diagnosis category to which the test script execution sequence belongs;
a second generating unit, configured to generate a test script based on the diagnosis category and the corresponding test script execution sequence; and
a storing unit, configured to store the test script in a test script collection to remotely synchronize the test script to the vehicle to be diagnosed.

In some embodiments, the first server also includes a diagnostic database, and the diagnostic database includes a correspondence between each signal variable generated by each test step and a respective diagnostic fault, and the remote diagnosis apparatus further includes:
a monitoring unit, configured to monitor whether there is an update in the diagnostic database; and
a second sending unit, configured to, in response to monitoring that there is an update, send an updated diagnostic database to a preset diagnostic engine in the vehicle to be diagnosed, to enable the preset diagnostic engine to diagnose, based on the updated diagnostic database, an execution result of the test script.

In some embodiments, the remote diagnosis apparatus further includes:
a configuring unit, configured to, before sending, by the first sending unit based on the remote diagnosis request, the remote control instruction to the vehicle to be diagnosed, configure condition information on testing the vehicle to be diagnosed, and send the condition information to the vehicle to be diagnosed, in which the condition information includes status information items that need to be inspected in the vehicle to be diagnosed; and
a reconfiguring unit, configured to, based on receiving a response that the vehicle to be diagnosed does not satisfy the condition information, reconfigure the condition information until the vehicle to be diagnosed satisfies the condition information.

According to a fifth aspect of embodiments of the disclosure, a remote diagnosis system including a server and a vehicle to be diagnosed, is provided. The vehicle to be diagnosed includes the remote diagnosis apparatus of any embodiment of the third aspect, and the server includes the remote diagnosis apparatus of any embodiment of the fourth aspect.

According to a sixth aspect of embodiments of the disclosure, an electronic device is provided. The electronic device includes:
at least one processor; and
a memory communicatively coupled to the at least one processor; in which
the memory stores instructions executable by the at least one processor, and when the instructions are executed by the at least one processor, the at least one processor is caused to perform the method of any embodiment of the first aspect or the method of any embodiment of the second aspect.

According to a seventh aspect of embodiments of the disclosure, a non-transitory computer-readable storage medium having computer instructions stored thereon is provided. The computer instructions are used to cause a computer to perform the method of any embodiment of the first aspect or the method of any embodiment of the second aspect.

According to an eighth aspect of embodiments of the disclosure, a computer program product including a computer program is provided. When the computer program is executed by a processor, the method of any embodiment of the first aspect or the method of any embodiment of the second aspect is implemented.

According to a ninth aspect of embodiments of the disclosure, a computer program including computer program codes is provided. When the computer program codes are running on a computer, the computer is caused to implement the method of any embodiment of the first aspect or the method of any embodiment of the second aspect.

With the remote diagnosis methods, the remote diagnosis apparatuses, the system, the electronic device, the storage medium, the computer program product and the computer program according to embodiments of the disclosure, the remote control instruction sent by the server is received, in which the remote control instruction corresponds to a diagnosis category, and the remote control instruction is configured to instruct the vehicle to be diagnosed to execute a target test script corresponding to the remote control instruction. The target test script is executed based on the preset diagnostic engine. The execution result of the target test script is diagnosed based on the preset diagnostic engine. The diagnostic result of the target test script is reported to the server. Compared to the related art, the introduction of performing the target test script on the vehicle end through remote control may reduce the time for vehicle malfunction inspection and location, thereby improving maintenance efficiency.

It is understandable that the description in this section is not intended to identify key or important features of embodiments of the disclosure, nor is it intended to limit the scope of the disclosure. Additional features of the disclosure will be readily understood by the following description.

### BRIEF DESCRIPTION OF THE DRAWINGS

The accompanying drawings are used to better understand the disclosure and do not constitute a limitation of the disclosure.
FIG. 1 is a flowchart illustrating a remote diagnosis method according to an embodiment of the disclosure.
FIG. 2 is a schematic diagram illustrating a remote diagnosis system according to an embodiment of the disclosure.
FIG. 3 is a schematic diagram illustrating an interaction between a preset diagnostic engine and a preset interface according to an embodiment of the disclosure.
FIG. 4 is a flowchart illustrating a remote diagnosis method according to an embodiment of the disclosure.
FIG. 5 is a schematic diagram illustrating a remote diagnosis apparatus according to an embodiment of the disclosure.
FIG. 6 is a schematic diagram illustrating another remote diagnosis apparatus according to an embodiment of the disclosure.
FIG. 7 is a schematic diagram illustrating still another remote diagnosis apparatus according to an embodiment of the disclosure.
FIG. 8 is a schematic diagram illustrating yet another remote diagnosis apparatus according to an embodiment of the disclosure.
FIG. 9 is a block diagram illustrating an electronic device 500 according to an embodiment of the disclosure.

### DETAILED DESCRIPTION

Embodiments of the disclosure are described hereinafter in combination with the accompanying drawings, which include various details of embodiments of the disclosure in order to aid in understanding and shall be considered illustrative only. Those skilled in the art should recognize that various changes and modifications may be made to embodiments described herein without departing from the scope and spirit of the disclosure. Similarly, descriptions of well-known features and structures are omitted from the following description for the sake of clarity and brevity.

Remote diagnosis methods, remote diagnosis apparatuses, an electronic device, a storage medium, a computer program product and a computer program of embodiments of the disclosure will be described below with reference to the accompanying drawings.

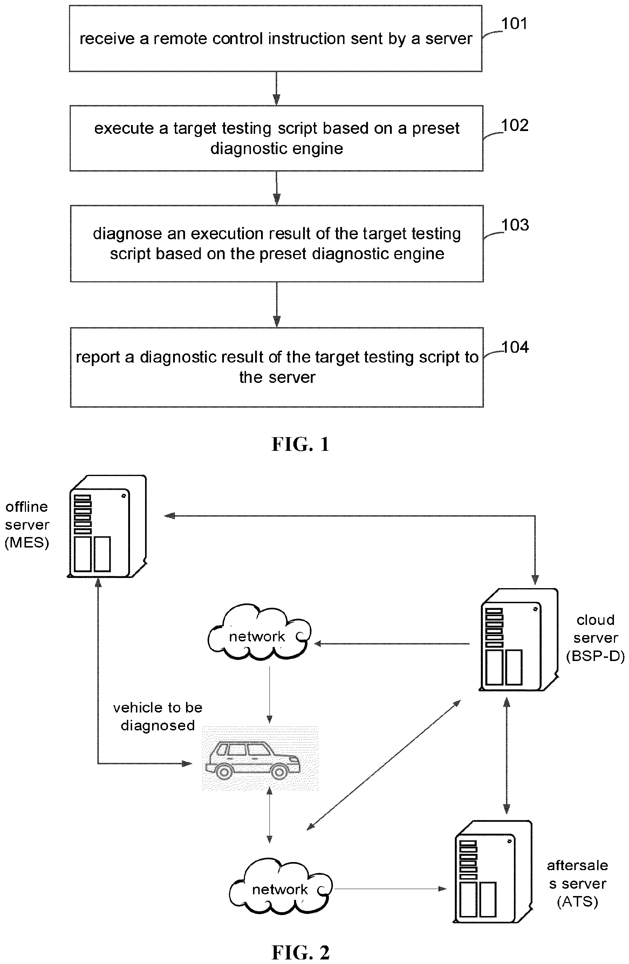

FIG. 1 is a flowchart illustrating a remote diagnosis method according to an embodiment of the disclosure.

As illustrated in FIG. 1, the remote diagnosis method is applied to a side of vehicle to be diagnosed. The method includes blocks 101-104.

At block 101, a remote control instruction sent by a server is received, in which the remote control instruction corresponds to a diagnosis category, and the remote control instruction is configured to instruct the vehicle to be diagnosed to execute a target test script corresponding to the remote control instruction.

The server may send the remote control instruction after the vehicle to be diagnosed sends request information, or the server may actively send the remote control instruction to the vehicle to be diagnosed. For example, it may be configured to perform periodic diagnosis on the entirety (full vehicle diagnosis) or part of the vehicle to be diagnosed, which may trigger to send the remote control instruction configured to instruct the vehicle to be diagnosed to execute the target test script.

The target test script is one kind of or at least one kind of test scripts, which is generated on the server side and issued to the vehicle to be diagnosed. Or, the vehicle to be diagnosed requests to download the test scripts and stores the received test scripts in a local test script collection, and obtains the target test script from the local test script collection after receiving the remote control instruction.

The test script is a scripted description of an execution process of a diagnosis test sequence (i.e., the test script is a test script execution sequence). In practical applications, lua script language is used. However, it does not mean that only the lua script language can be used. In fact, any language may be used to obtain the scripted description of the test script. In order to facilitate remote diagnosis, each test script may be classified by its diagnosis category to have a different Identity Document (ID). For example, when the diagnosis category is the full vehicle diagnosis, the corresponding test script is the test script 1. If the diagnosis category is a vehicle lamp diagnosis, the corresponding test script is the test script 2. If the diagnosis category is key matching diagnosis, the corresponding test script is the test script 3, and so on.

The trigger of remote diagnosis usually comes from a diagnosis business function requirement, which is usually output in a format of docx file and issued by an offline electricity inspection server or an aftersales diagnosis service server. For example, the diagnosis business function requirement is to request the offline electricity inspection to perform an electricity inspection on a certain workstation for a key matching task, and the corresponding test script is key matching test script. The diagnosis business function requirement is to request the aftersales diagnosis service server to read full vehicle fault codes of the entire vehicle, and the corresponding test script is full vehicle malfunction code test script, which is usually output in a format of xlsm file.

At block 102, the target test script is executed based on a preset diagnostic engine.

The test script is analyzed based on the preset diagnostic engine (such as Diag Agent), and a corresponding test script execution sequence is obtained to execute the target test script. Since the target test script is described using the lua script language, the corresponding preset Diag Agent may run the lua script to realize the target test script.

At block 103, an execution result of the target test script is diagnosed based on the preset diagnostic engine.

The preset diagnostic engine (e.g., the Diag Agent) may execute the target test script and determine the final execution result of the target test script. The execution result and failure reasons will be updated to the server, regardless of whether the execution is successful or unsuccessful. In another possible implementation of embodiments of the disclosure, the target test script also includes display information and operation feedback information of a user interface of the vehicle to be diagnosed, and display information and feedback information of the cloud user interface. The preset diagnostic engine (e.g., the Diag Agent) may analyze the display requirements of the sequenced diagnosis test script and call the Human Machine Interface (HMI) of the vehicle to be diagnosed, to realize the display on the vehicle and the cloud terminal for users to view.

At block 104, a diagnostic result of the target test script is reported to the server.

In practical applications, the diagnostic result includes at least one of information on an execution process of the test script, information on a record file of execution process data of the test script, or information on an execution result of the test script. During the execution process of the test script execution sequence, the preset diagnostic engine (e.g., the Diag Agent) shall be able to save the diagnosis transceiver bus messages related to this execution of the test sequences that are record simultaneously based on the same timestamp, and realize storage and reporting of the reporting configuration file based on the storage requirement of the reporting configuration file defined by the test sequence. In the specific application process, the reporting configuration file is generated based on the above diagnostic result, and the reporting configuration file is uploaded to the server.

With the remote diagnosis method according to embodiments of the disclosure, the remote control instruction sent by the server is received, in which the remote control instruction corresponds to the diagnosis category, and the remote control instruction is configured to instruct the vehicle to be diagnosed to execute the target test script corresponding to the remote control instruction. The target test script is executed based on the preset diagnostic engine. The execution result of the target test script is diagnosed based on the preset diagnostic engine. The diagnostic result of the target test script is reported to the server. Compared to the related art, the introduction of performing the target test script on the vehicle end through remote control may reduce the time for vehicle malfunction inspection and location, thereby improving maintenance efficiency.

With the remote diagnosis method according to embodiments of the disclosure, not only is there provided the remote diagnosis that may diagnose the vehicle to be diagnosed when there is a vehicle malfunction, but also a prediction alarm diagnosis which proactively predicts and provides an alarm on the vehicle malfunction is provided when the vehicle to be diagnosed has no vehicle malfunction. To realize the above two ways, the remote diagnosis system illustrated as FIG. 2 is used. The remote diagnosis system includes servers and a vehicle to be diagnosed. The servers include: an offline server (such as Manufacturing Execution System, MES), a cloud server (such as Business Service Platform for Diagnostics, BSP-D), and an aftersales server (such as Aftersales Technical Service, ATS).

For the first way, receiving the remote control instruction sent, in response to the remote diagnosis request of the vehicle to be diagnosed, by the server includes: after the offline server (such as the MES) performs an electricity inspection on the vehicle to be diagnosed, sending the remote diagnosis request to the cloud server based on to an electricity inspection result from the offline server (such as the MES); and receiving the remote control instruction sent by the cloud server. The offline server (such as the MES) may realize the vehicle-based or cloud-based automatic or semi-automatic electricity inspection of the vehicle to be diagnosed at different workstations in an offline stage. Based on the electricity inspection performed on the vehicle to be diagnosed by the offline server (such as the MES), a diagnosis category of the vehicle to be diagnosed may be determined. The offline server (such as the MES) sends the remote diagnosis request to the cloud server (such as the BSP-D) based on the diagnosis category. The cloud server (such as the BSP-D) responds to the remote diagnosis request and sends the remote control instruction to the vehicle to be diagnosed, to enable the vehicle to be diagnosed to perform the diagnosis through the diagnosis method described in above embodiments. The above implementation process may be used in an application scenario where there has been a vehicle malfunction in the vehicle to be diagnosed. Compared with the method in the related art of connecting the vehicle to the aftersales diagnostic instrument through wires and diagnosing the vehicle, in embodiments of the disclosure, the diagnosis may be accomplished by logging into the offline server (such as the MES), which is simple and easy to operate, thereby saving inspection time.

For the second way, receiving the remote control instruction sent, based on the vehicle status data of the vehicle to be diagnosed, by the server includes: receiving the remote control instruction issued by the aftersales server through a preset interface of the cloud server called by the aftersales server, in which the aftersales server is configured to diagnose the vehicle to be diagnosed based on a preset condition in accordance with vehicle data of the vehicle to be diagnosed. In practical applications, after logging into the aftersales server (such as the ATS), the interface of the cloud server (such as the BSP-D) is called by the aftersales server (such as the ATS), to enable the cloud server (such as the BSP-D) to establish a wireless communication with the vehicle to be diagnosed, thereby realizing an indirect connection relation between the aftersales server (such as the ATS) and the vehicle. A condition-based diagnosis may be set in the aftersales server (such as the ATS) for the vehicle to be diagnosed based on the vehicle data of the vehicle to be diagnosed. The condition-based diagnosis may be set based on traveling miles of the vehicle, a traveling duration of the vehicle, or a usage duration of a certain component of the vehicle. This approach may be applied in an application scenario where the vehicle malfunction of the vehicle to be diagnosed has already occurred, or may be used for proactively providing an alarm on the vehicle malfunction when there is no vehicle malfunction.

As a refinement of above embodiments, the block 102 of executing the target test script based on the remote control instruction includes: analyzing the target test script based on the preset diagnostic engine (such as the Diag Agent), determining a diagnosis equipment corresponding to the diagnosis category, and determining a corresponding test script execution sequence, in which the test script execution sequence includes operations to be performed by test steps, and the diagnosis equipment is an equipment included in the vehicle; and calling a preset interface corresponding to the diagnosis equipment to transmit the test script execution sequence to the diagnosis equipment, to enable the diagnosis equipment to execute the test script execution sequence based on the operations to be performed by the test steps.

The target test script is generated on the server side, during which the correspondence between the diagnosis category and the diagnosis equipment is established. For example, when the diagnosis category is the vehicle lamp inspection, the corresponding diagnosis equipment is lamps of the vehicle. During the execution process, the preset interface corresponding to the vehicle lamps is called to transmit the test script execution sequence to the vehicle lamps, to enable the test script execution sequence to be executed based on the operations need to be performed by the test steps. During the execution of the test script execution sequence, a measurement and drawing step is executed, and the execution result is fed back to the preset diagnostic engine (such as the Diag Agent), so that the preset diagnostic engine (such as the Diag Agent) may perform the diagnosis. The above examples are given to facilitate understanding, but the diagnosis category, the diagnosis equipment, and the operation information that need to be performed by the test steps are not limited in embodiments of the disclosure and may be flexibly modified or updated on the server side according to different needs.

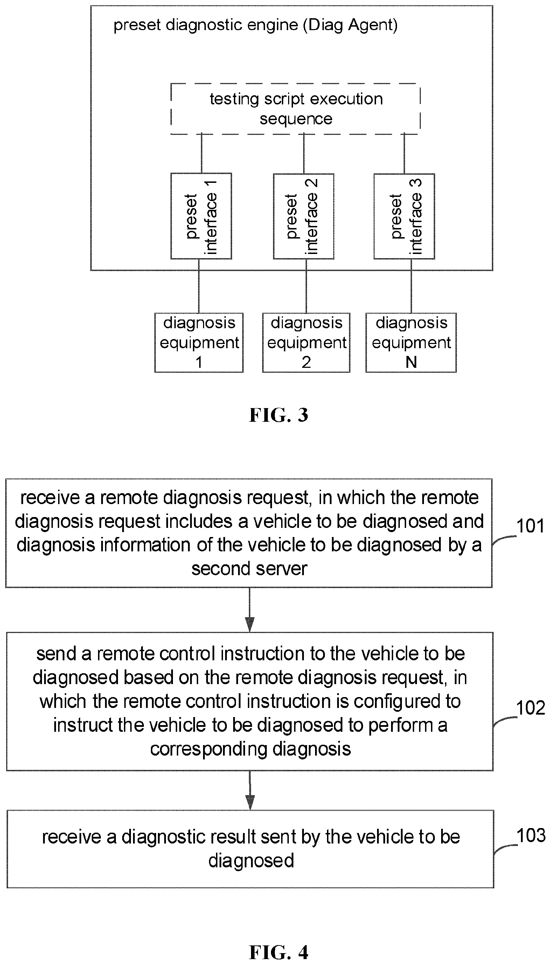

For ease of understanding, FIG. 3 is a schematic diagram illustrating an interaction between a preset diagnostic engine and a preset interface corresponding to a diagnosis equipment according to an embodiment of the disclosure. As illustrated in FIG. 3, N is greater than 2.

Due to differences between different target test scripts, the condition information on executing each test script may be evaluated once before executing each target test script. The purpose is to create a condition for the preset diagnostic engine (such as the Diag Agent) to correctly execute operations and avoid an error during execution of operations by the preset diagnostic engine (such as the Diag Agent). In detail, the condition information on executing the test script configured and sent by the server is received, in which the condition information includes status information items that need to be inspected in the vehicle to be diagnosed. It is determined that the status information items in the vehicle to be diagnosed satisfy the condition information. Since there is a difference between execution condition information corresponding to different target test scripts, when executing the target test script, the status information items of the vehicle to be diagnosed shall be examined one by one.

The target test script includes numerical calculations, logic, decisions and loops related to diagnostic variables and bus variables. The diagnostic engine shall be able to analyze the sequenced test script and realize the operations. The preset diagnostic engine (such as the Diag Agent) may call a preset communication interface to obtain a diagnostic database during the execution process of the target test script. The diagnostic database is used for realizing diagnoses of all test scripts, and the diagnosis is based on the signaling variable during the execution process of the test script. The preset diagnostic engine (such as the Diag Agent) monitors the change in each signaling variable while executing the target test script. In other words, after executing one of the steps of the target test script, the preset diagnostic engine determines whether the signaling variable in this step has changed or not. Before the execution of the target test script, a respective default value may be stored for each signal. After the execution of the target test script, the default value of a signal variable may change or remain unchanged, but its final execution result shall be a fixed value. When the execution result of the signal variable is not a fixed value, it may be determined that there is a fault corresponding to the signal. Based on the diagnostic database, the corresponding diagnostic result of the signal variable may be obtained.

For ease of understanding, in some embodiments, assuming that the target test script is used for inspecting the vehicle lamps, when the preset diagnostic engine executes the target test script, the preset diagnostic engine calls and controls the operation of the vehicle lamps. As an example, when the target test script is used for triggering the vehicle lamps to represent turn-left, the vehicle lamps actually represent turn-right. Before the triggering, the signal variables are 0 on the left (which represents the left vehicle lamp) and 0 on the right (which represents the right vehicle lamp), and after triggering, the signal variables are 0 on the left and 1 on the right. If there is no vehicle malfunction on the vehicle lamps, the signal variables after the triggering shall be 1 on the left and 0 on the right. After controlling the vehicle lamps, it is determined that there is a change in the signaling variables, the signaling variables are diagnosed based on the diagnostic database, and a diagnostic result for indicating that the vehicle lamps has a malfunction may be obtained. It is noteworthy that the above examples are only brief examples given for ease of understanding and do not represent a specific execution process, and the specific contents of the target test script and the diagnostic database are not limited in embodiments of the disclosure.

In conclusion, compared with the related art, in embodiments of the disclosure, the execution of the target test script of the vehicle is executed through remote control, which may reduce the time of inspecting and positioning the vehicle malfunction, thereby improving maintenance efficiency. Moreover, the preset diagnostic engine (such as the Diag Agent) takes the vehicle to be diagnosed as a core. The server may update the test script diagnosis sequence of the preset diagnostic engine (such as the Diag Agent) at the vehicle end in real time, so as to realize the upgrade of diagnosis functions of different controllers at different vehicle platforms. In addition, the active diagnosis of the vehicle to be diagnosed may be performed based on the vehicle data of the vehicle to be diagnosed. When it is determined that there is the vehicle malfunction, the user is reminded to maintain the vehicle or when a certain part of the vehicle need to be replaced, the replacement part may be prepared in advance, thereby reducing the waiting time for maintenance.

Embodiments of the disclosure also provide a remote diagnosis method. As illustrated in FIG. 4, the method is applied to a first server side. The method includes blocks 201-203.

At block 201, a remote diagnosis request is received, in which the remote diagnosis request includes a vehicle to be diagnosed and diagnosis information of the vehicle to be diagnosed by a second server.

The "first server" and the "second server" described in embodiments of the disclosure represent different servers that have different execution functions. The descriptions of the "first server" and the "second server" may be referred to the relevant description in FIG. 2, in which the first server is a cloud server (such as the BSP-D), and the second server may be an offline server (such as the MES) and an aftersales server (such as the ATS). Detailed descriptions of the vehicle, the cloud server (such as the BSP-D), the offline server (such as the MES) and the aftersales server (such as the ATS) may be referred to the relevant description in FIG. 2, which will not be repeated in embodiments of the disclosure.

Since the offline server (such as the MES) and the aftersales server (such as the ATS) cannot directly connect with the vehicle to be diagnosed, a variety of preset interfaces are provided to be called by the offline server (such as the MES) and the aftersales server (such as the ATS), to realize the remote diagnosis of the vehicle to be diagnosed. In the specific application process, the cloud server (such as the BSP-D) receives the remote diagnosis request sent, based on the preset interface, by the offline server (such as the MES) and the aftersales server (such as the ATS). The remote diagnosis request includes the vehicle to be diagnosed and the diagnosis category. In the cloud server (such as the BSP-D), it is possible to realize cloud management of test scripts, issuing of test scripts, triggered execution of test scripts, and storage and display of test results.

At block 202, a remote control instruction is sent to the vehicle to be diagnosed based on the remote diagnosis request, in which the remote control instruction is configured to instruct the vehicle to be diagnosed to perform a corresponding diagnosis.

This block is to implement the test script triggering and execution functions of the cloud server (such as the BSP-D).

In the implementation process, it needs to classify different test scripts based on their diagnosis categories to have different IDs. For example, when the diagnosis category is the full vehicle diagnosis, the corresponding test script is the test script 1; when the diagnosis category is the vehicle lamp diagnosis, the corresponding test script is the test script 2; when the diagnosis category is the key matching diagnosis, the corresponding test script is the test script 3, and so on. The purpose is to carry the ID of the test script that needs to be executed when sending the remote diagnosis instruction to the vehicle to be diagnosed, to instruct the vehicle to be diagnosed to perform a corresponding diagnosis corresponding to the ID.

At block 203, a diagnostic result sent by the vehicle to be diagnosed is received.

During the test process, the vehicle to be diagnosed shall be able to save the diagnosis sending-receiving bus messages related to the test that is synchronously recorded based on the same timestamp, and realize storage and reporting of the reporting configuration file based on the storage requirement of the reporting configuration file defined by the test sequence. The reporting configuration file includes at least one of information on an execution process of the test script, information on a record file of execution process data of the test script, and information on an execution result of the test script, to achieve cloud management of the test results.

With the remote diagnosis apparatus according to embodiments of the disclosure, the remote control instruction sent by the server is received, in which the remote control instruction corresponds to the diagnosis category, and the remote control instruction is configured to instruct the vehicle to be diagnosed to execute the target test script corresponding to the remote control instruction. The target test script is executed based on the preset diagnostic engine. The execution result of the target test script is diagnosed based on the preset diagnostic engine. The diagnostic result of the target test script is reported to the server. Compared to the related art, the introduction of performing the target test script on the vehicle end through remote control may reduce the time for vehicle malfunction inspection and location, thereby improving maintenance efficiency.

As can be seen from above embodiments, the cloud server (such as the BSP-D) is also capable of realizing cloud management of test scripts and issuing of test scripts. Before sending the remote diagnosis instruction to the vehicle to be diagnosed based on the remote diagnosis request, the remote diagnosis method further includes: generating a test script execution sequence; determining a diagnosis category to which the test script execution sequence belongs; generating the test script based on the diagnosis category and the corresponding test script execution sequence; and storing the test script in a test script collection to remotely synchronize the test script to the vehicle to be diagnosed.

The essence of the generation process of the test script execution sequence is to generate a scripted description of the execution process of a diagnostic test sequence. In practical applications, the lua script language is used. However, it does not mean that only the lua script language can be used. In fact, any language may be used to obtain the scripted description of the test script. After writing a test script execution sequence, the diagnosis category to which the test script execution sequence belongs is determined. The test script is generated based on the diagnosis category and the corresponding test script execution sequence. Each test script is assigned with a corresponding script ID. The test script is stored in the test script collection and remotely synchronized to the vehicle to be diagnosed.

As a possible implementation of embodiments of the disclosure, after the cloud server (such as the BSP-D) issues the test script collection to the vehicle to be diagnosed, a test script of the vehicle to be diagnosed will be updated remotely based on an update to the test scripts in the test script collection. In this way, the latest version of test script may be executed when the vehicle to be diagnosed executes the test script, without the need of upgrading the test script during the diagnostic process, thereby saving the time consumed in diagnosis and improving the diagnostic efficiency.

Embodiments of the disclosure focus on the execution of the test script by the vehicle to be diagnosed to realize remote diagnosis. After the execution of the test script by the vehicle to be diagnosed, the diagnosis is carried out on the execution result of the test script, and the diagnosis process refers to the diagnostic database generated by the cloud server (such as the BSP-D). In order to ensure the latest updated version of the diagnostic database, it is monitored whether there is an update of the diagnostic database in real time or at regular intervals (e.g., one day). In response to monitoring that there is an update, the updated diagnostic database is sent to the preset diagnostic engine in the vehicle to be diagnosed, so that the preset diagnostic engine carries out the diagnosis on the execution result of the test script based on the updated diagnostic database, which saves the time consumed for the diagnosis of the vehicle to be diagnosed, thereby improving the diagnosis efficiency.

In order to ensure that the vehicle to be diagnosed is able to execute test script successfully, condition information on the execution of each test script execution sequence may be set up by the cloud server (such as the BSP-D). The cloud server (such as the BSP-D) configures before sending, based on the remote diagnosis request, the remote diagnosis instruction to the vehicle to be diagnosed, the condition information on performing the test by the vehicle to be diagnosed. The condition information includes status information items that need to be tested in the vehicle to be diagnosed. Based on a received response that the vehicle to be diagnosed does not satisfy the condition information, the condition information is reconfigured to cause the vehicle to be diagnosed to perform the corresponding test. Based on a received response that the vehicle to be diagnosed satisfies the condition information, the remote diagnosis instruction is sent to the vehicle to be diagnosed. For example, the condition information includes status information items that need to be tested in the vehicle to be diagnosed, such as, the vehicle being in a maintenance mode, a power mode of the vehicle to be diagnosed being OFF, the gear being P, the vehicle speed being less than 2 km/h, a default value of a signaling variable, and so on. The contents included in the condition information are not limited in embodiments of the disclosure.

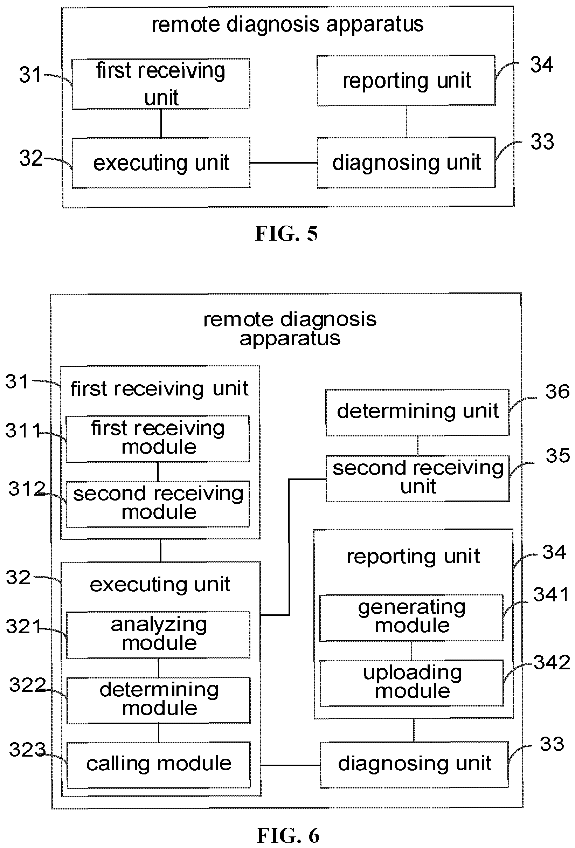

FIG. 5 is a schematic diagram illustrating a remote diagnosis apparatus according to an embodiment of the disclosure. The remote diagnosis apparatus is applied to a side of vehicle to be diagnosed. As illustrated in FIG. 5, the apparatus includes: a first receiving unit 31, an executing unit 32, a diagnosing unit 33 and a reporting unit 34.

The first receiving unit 31 is configured to receive a remote control instruction sent by a server, in which the remote control instruction corresponds to a diagnosis category, and the remote control instruction is configured to instruct the vehicle to be diagnosed to execute a target test script corresponding to the remote control instruction.

The executing unit 32 is configured to execute the target test script based on a preset diagnostic engine.

The diagnosing unit 33 is configured to diagnose an execution result of the target test script based on the preset diagnostic engine.

The reporting unit 34 is configured to report a diagnostic result of the target test script to the server.

With the remote diagnosis apparatus according to embodiments of the disclosure, the remote control instruction sent by the server is received, in which the remote control instruction corresponds to the diagnosis category, and the remote control instruction is configured to instruct the vehicle to be diagnosed to execute the target test script corresponding to the remote control instruction. The target test script is executed based on the preset diagnostic engine. The execution result of the target test script is diagnosed based on the preset diagnostic engine. The diagnostic result of the target test script is reported to the server. Compared to the related art, the introduction of performing the target test script on the vehicle end through remote control may reduce the time for vehicle malfunction inspection and location, thereby improving maintenance efficiency.

In a possible implementation of embodiments, as illustrated in FIG. 6, the first receiving unit 31 includes: a first receiving module 311 and a second receiving module 312.

The first receiving module 311 is configured to receive the remote control instruction sent, in response to a remote diagnosis request of the vehicle to be diagnosed, by the server.

The second receiving module 312 is configured to receive the remote control instruction sent, based on vehicle status data of the vehicle to be diagnosed, by the server.

In a possible implementation of embodiments, as illustrated in FIG. 6, the server includes an offline server and a cloud server. The first receiving module 311 is configured to: after the offline server performs an electricity inspection on the vehicle to be diagnosed, send the remote diagnosis request to the cloud server based on an electricity inspection result from the offline server; and receive the remote control instruction sent by the cloud server.

In a possible implementation of embodiments, as illustrated in FIG. 6, the server includes an aftersales server and a cloud server. The second receiving module 312 is configured to: receive the remote control instruction issued by the aftersales server through a preset interface of the cloud server called by the aftersales server, in which the aftersales server is configured to diagnose the vehicle to be diagnosed based on a preset condition in accordance with vehicle data of the vehicle to be diagnosed.

In a possible implementation of embodiments, as illustrated in FIG. 6, the executing unit 32 includes: an analyzing module 321, a determining module 322, and a calling module 323.

The analyzing module 321 is configured to analyze the target test script.

The determining module 322 is configured to determine a diagnosis equipment corresponding to the diagnosis category and determine a corresponding test script execution sequence, in which the test script execution sequence includes operations to be performed by test steps, and the diagnosis equipment is an equipment included in the vehicle.

The calling module 323 is configured to call a preset interface corresponding to the diagnosis equipment to transmit the test script execution sequence to the diagnosis equipment, to enable the diagnosis equipment to execute the test script execution sequence based on the operations to be performed by the test steps.

In a possible implementation of embodiments, as illustrated in FIG. 6, the remote diagnosis apparatus further includes: a second receiving unit 35 and a determining unit 36.

The second receiving unit 35 is configured to, before executing the target test script based on the preset diagnostic engine, receive condition information on executing the test script configured and sent by the server, in which the condition information includes status information items that need to be detected in the vehicle to be diagnosed.

The determining unit 36 is configured to determine that the status information items in the vehicle to be diagnosed satisfy the condition information.

In a possible implementation of embodiments, as illustrated in FIG. 6, the diagnosing unit 33 is further configured to: call a diagnostic database, in which the diagnostic database includes a correspondence between each signaling variable generated by executing each test step of the test script and a respective diagnosis fault; analyze each signaling variable generated by executing each test step based on the diagnostic database, and determine a diagnostic fault of the target test script according to the correspondence.

In a possible implementation of embodiments, as illustrated in FIG. 6, the reporting unit 34 includes: a generating module 341 and an uploading module 342.

The generating module 341 is configured to generate a reporting configuration file based on the diagnostic result, in which the diagnostic result includes at least one of information on an execution process of the test script, information on a record file of execution process data of the test script, or information of an execution result of the test script.

The uploading module 342 is configured to upload the reporting configuration file to the server.

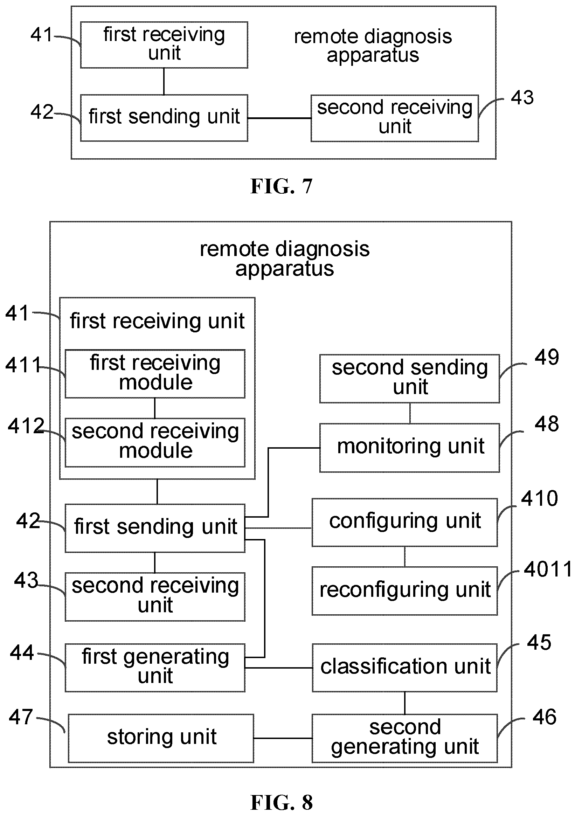

Embodiments of the disclosure further provide a remote diagnosis apparatus. As illustrated in FIG. 7, the remote diagnosis apparatus is applied to a first server side. The apparatus includes: a first receiving unit 41, a first sending unit 42 and a second receiving unit 43.

The first receiving unit 41 is configured to receive a remote diagnosis request, in which the remote diagnosis request includes a vehicle to be diagnosed and diagnosis information of the vehicle to be diagnosed by a second server.

The first sending unit 42 is configured to send a remote control instruction to the vehicle to be diagnosed based on the remote diagnosis request, in which the remote control instruction is configured to instruct the vehicle to be diagnosed to perform a corresponding diagnosis.

The second receiving unit 43 is configured to receive a diagnostic result sent by the vehicle to be diagnosed.

In a possible implementation of the embodiment, as illustrated in FIG. 8, the first server includes an offline server and an aftersales server. The first receiving unit 41 includes: a first receiving module 411 and a second receiving module 412.

The first receiving module 411 is configured to receive the remote diagnosis request sent, based on an electricity inspection result of the vehicle to be diagnosed, by the offline server.

The second receiving module 412 is configured to receive the remote diagnosis request triggered by calling a preset interface by the aftersales server, in which the aftersales server is configured to diagnose the vehicle to be diagnosed based on a preset condition in accordance with vehicle data of the vehicle to be diagnosed.

In a possible implementation of embodiments, as illustrated in FIG. 8, the apparatus further includes: a first generating unit 44, a classification unit 45, a second generating unit 46, and a storing unit 47.

The first generating unit 44 is configured to generate a test script execution sequence before sending, based on the remote diagnosis request, the remote control instruction to the vehicle to be diagnosed.

The classification unit 45 is configured to determine a diagnosis category to which the test script execution sequence belongs.

The second generating unit 46 is configured to generate the test script based on the diagnosis category and the corresponding test script execution sequence.

The storing unit 47 is configured to store the test script in a test script collection to remotely synchronize the test script to the vehicle to be diagnosed.

In a possible implementation of embodiments, as illustrated in FIG. 8, the first server also includes a diagnostic database, and the diagnostic database includes a correspondence between each signal variable generated by each test step and a respective diagnostic fault. The remote diagnosis apparatus further includes: a monitoring unit 48 and a second sending unit 49.

The monitoring unit 48 is configured to monitor whether there is an update of the diagnostic database.

The second sending unit 49 is configured to, based on monitoring that there is an update, send the updated diagnostic database to a preset diagnostic engine in the vehicle to be diagnosed, to enable the preset diagnostic engine to diagnose an execution result of the test script based on the updated diagnostic database.

In a possible implementation of embodiments, as illustrated in FIG. 8, the remote diagnosis apparatus further includes: a configuring unit 410 and a reconfiguring unit 4011.

The configuring unit 410 is configured to, before sending, based on the remote diagnosis request, the remote control instruction to the vehicle to be diagnosed, configure condition information on testing the vehicle to be diagnosed, and send the condition information to the vehicle to be diagnosed, in which the condition information includes status information items that need to be detected in the vehicle to be diagnosed.

The reconfiguring unit 4011 is configured to, based on a received response that the vehicle to be diagnosed does not satisfy the condition information, reconfigure the condition information, to enable the vehicle to be diagnosed to satisfy the condition information.

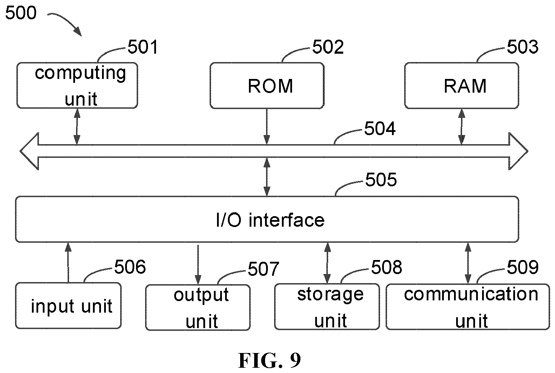

Embodiments of the disclosure further provide a remote diagnosis system. As illustrated in FIG. 9, the remote diagnosis system includes: servers and a vehicle to be diagnosed. The vehicle to be diagnosed includes the remote diagnosis apparatus of above embodiments (i.e., in FIGS 5-6), and the servers include the remote diagnosis apparatus of above embodiments (i.e., in FIGS 7-8).

It is noteworthy that the foregoing description of embodiments of the remote diagnosis methods is also applicable to the remote diagnosis apparatus of embodiments with the same principle, which is not limited in embodiments.

Embodiments of the disclosure also provide an electronic device, a readable storage medium, and a computer program product.

According to embodiments of the disclosure, an electronic device is also provided. The electronic device includes: at least one processor and a memory communicatively connected to the at least one processor. The memory stores instructions executable by the at least one processor. When the instructions are executed by the at least one processor, the at least one processor is caused to perform the methods described in any of above embodiments.

According to embodiments of the disclosure, a non-transitory computer-readable storage medium having computer instructions stored thereon is provided. The computer instructions are used to cause a computer to perform the methods described in any of preceding embodiments.

According to embodiments of the disclosure, a computer program product including a computer program is provided. When the computer program is executed by a processor, the methods of any one of above embodiments is implemented.

FIG. 9 is a block diagram illustrating an electronic device 500 used to implement the embodiments of the disclosure. The electronic device is intended to represent various forms of digital computers, such as laptop computers, desktop computers, workbenches, personal digital assistants, servers, blade servers, mainframe computers, and other suitable computers. Electronic devices may also represent various forms of mobile devices, such as personal digital processors, cellular phones, smart phones, wearable devices, and other similar computing devices. The components shown here, their connections and relations, and their functions are merely examples, and are not intended to limit the implementation of the disclosure described and/or required herein.

As illustrated in FIG. 9, the device 500 includes a computing unit 501 performing various appropriate actions and processes based on computer programs stored in a Read-Only Memory (ROM) 502 or computer programs loaded from a storage unit 508 to a Random Access Memory (RAM) 503. In the RAM 503, various programs and data required for the operation of the device 500 are stored. The computing unit 501, the ROM 502, and the RAM 503 are connected to each other through a bus 504. An input/output (I/O) interface 505 is also connected to the bus 504.

Components in the device 500 are connected to the I/O interface 505, including: an input unit 506, such as a keyboard, a mouse; an output unit 507, such as various types of displays, speakers; a storage unit 508, such as a disk, an optical disk; and a communication unit 509, such as network cards, modems, and wireless communication transceivers. The communication unit 509 allows the device 500 to exchange information/data with other devices through a computer network such as the Internet and/or various telecommunication networks.

The computing unit 501 may be various general-purpose and/or dedicated processing components with processing and computing capabilities. Some examples of the computing unit 501 include, but are not limited to, a Central Processing Unit (CPU), a Graphics Processing Unit (GPU), various dedicated Artificial Intelligence (AI) computing chips, various computing units that run machine learning model algorithms, and a Digital Signal Processor (DSP), and any appropriate processor, controller and microcontroller. The computing unit 501 executes the various methods and processes described above, such as the remote diagnosis method. For example, in some embodiments, the method may be implemented as computer software programs, which are tangibly included in a machine-readable medium, such as the storage unit 508. In some embodiments, part or all of the computer programs may be loaded and/or installed on the device 500 via the ROM 502 and/or the communication unit 509. When the computer programs are loaded on the RAM 503 and executed by the computing unit 501, one or more steps of the method described above may be executed. Alternatively, in other embodiments, the computing unit 501 may be configured to perform the method in any other suitable manner (for example, by means of firmware).

Various implementations of the systems and techniques described above may be implemented by a digital electronic circuit system, an integrated circuit system, Field Programmable Gate Arrays (FPGAs), Application Specific Integrated Circuits (ASICs), Application Specific Standard Products (ASSPs), System on Chip (SOCs), Complex programmable logic devices (CPLDs), computer hardware, firmware, software, and/or a combination thereof. These various embodiments may be implemented in one or more computer programs, the one or more computer programs may be executed and/or interpreted on a programmable system including at least one programmable processor, which may be a dedicated or general programmable processor for receiving data and instructions from the storage system, at least one input device and at least one output device, and transmitting the data and instructions to the storage system, the at least one input device and the at least one output device.

The program code configured to implement the method of the disclosure may be written in any combination of one or more programming languages. These program codes may be provided to the processors or controllers of general-purpose computers, dedicated computers, or other programmable data processing devices, so that the program codes, when executed by the processors or controllers, enable the functions/operations specified in the flowchart and/or block diagram to be implemented. The program code may be executed entirely on the machine, partly executed on the machine, partly executed on the machine and partly executed on the remote machine as an independent software package, or entirely executed on the remote machine or server.

In the context of the disclosure, a machine-readable medium may be a tangible medium that may contain or store a program for use by or in combination with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, RAMs, ROMs, Electrically Programmable Read-Only-Memories (EPROMs), flash memories, fiber optics, Compact Disc Read-Only Memories (CD-ROMs), optical storage devices, magnetic storage devices, or any suitable combination of the foregoing.

In order to provide interaction with a user, the systems and techniques described herein may be implemented on a computer having a display device (e.g., a Cathode Ray Tube (CRT) or a Liquid Crystal Display (LCD) monitor for displaying information to a user); and a keyboard and pointing device (such as a mouse or trackball) through which the user can provide input to the computer. Other kinds of devices may also be used to provide interaction with the user. For example, the feedback provided to the user may be any form of sensory feedback (e.g., visual feedback, auditory feedback, or haptic feedback), and the input from the user may be received in any form (including acoustic input, voice input, or tactile input).

The systems and technologies described herein can be implemented in a computing system that includes background components (for example, a data server), or a computing system that includes middleware components (for example, an application server), or a computing system that includes front-end components (for example, a user computer with a graphical user interface or a web browser, through which the user can interact with the implementation of the systems and technologies described herein), or include such background components, intermediate computing components, or any combination of front-end components. The components of the system may be interconnected by any form or medium of digital data communication (e.g., a communication network). Examples of communication networks include: a Local Area Network (LAN), a Wide Area Network (WAN), the Internet and a block-chain network.

The computer system may include a client and a server. The client and server are generally remote from each other and interacting through a communication network. The client-server relation is generated by computer programs running on the respective computers and having a client-server relation with each other. The server may be a cloud server, also known as a cloud computing server or a cloud host. The server is a host product in a cloud computing service system to solve difficult management and poor business expansion of traditional physical hosting and Virtual Private Server (VPS) services. The server may be a server of a distributed system, or a server combined with a block-chain.

It is noteworthy that Artificial intelligence (AI) is a subject that causes computers to simulate certain thinking processes and intelligent behaviors (such as learning, reasoning, thinking and planning) of human beings, which covers both hardware-level technologies and software-level technologies. The AI hardware technologies generally include technologies such as sensors, dedicated AI chips, cloud computing, distributed storage, and big data processing. The AI hardware technologies generally include several major aspects such as computer vision technology, speech recognition technology, natural language processing technology, learning/deep learning, big data processing technology and knowledge graph technology.

According to embodiments of the disclosure, a computer program including computer program codes is provided. When the computer program codes are running by a computer, the computer is caused to perform the method described in any of the above embodiments.

It is noteworthy that the aforementioned explanation of the embodiments of the remote diagnosis method, the remote diagnosis apparatus, the remote diagnosis system, the device, the computer-readable storage medium, and the computer program product can also be applied to the computer programs of the above embodiments, and will not be described again here.

It is understandable that the various forms of processes shown above can be used to reorder, add or delete steps. For example, the steps described in the disclosure could be performed in parallel, sequentially, or in a different order, as long as the desired result of the technical solution disclosed in the disclosure is achieved, which is not limited herein.

The above specific embodiments do not constitute a limitation on the protection scope of the disclosure. Those skilled in the art should understand that various modifications, combinations, sub-combinations and substitutions can be made according to design requirements and other factors. Any modification, equivalent replacement and improvement made within the spirit and principle of this application shall be included in the protection scope of this application.

All embodiments of the disclosure can be executed alone or in combination with other embodiments, which are considered to be within the scope of protection claimed by the disclosure.

## Claims

1. A remote diagnosis method, applied to a side of vehicle to be diagnosed, comprising:
receiving a remote control instruction sent by a server, wherein the remote control instruction corresponds to a diagnosis category, and the remote control instruction is configured to instruct the vehicle to be diagnosed to execute a target test script corresponding to the remote control instruction;
executing the target test script based on a preset diagnostic engine;
diagnosing an execution result of the target test script based on the preset diagnosis engine; and
reporting a diagnostic result of the target test script to the server.

2. The method of claim 1, wherein receiving the remote control instruction sent by the server comprises:
receiving the remote control instruction sent, in response to a remote diagnosis request of the vehicle to be diagnosed, by the server;
or,
receiving the remote control instruction sent, based on vehicle status data of the vehicle to be diagnosed, by the server.

3. The method of claim 2, wherein the server comprises an offline server and a cloud server; and
receiving the remote control instruction sent, in response to the remote diagnosis request of the vehicle to be diagnosed, by the server comprises:
after the offline server performs an electricity inspection on the vehicle to be diagnosed, sending the remote diagnosis request to the cloud server based on an electricity inspection result from the offline server; and
receiving the remote control instruction sent by the cloud server.

4. The method of claim 2, wherein the server comprises: an aftersales server and a cloud server, and
receiving the remote control instruction sent, based on the vehicle status data of the vehicle to be diagnosed, by the server comprises:
receiving the remote control instruction issued through a preset interface of the cloud server called by the aftersales server, wherein the aftersales server is configured to diagnose the vehicle to be diagnosed based on a preset condition in accordance with vehicle data of the vehicle to be diagnosed.

5. The method of any one of claims 1 to 4, wherein executing the target test script based on the preset diagnostic engine comprises:
analyzing the target test script, determining a diagnosis equipment corresponding to the diagnosis category and determining a corresponding test script execution sequence, wherein the test script execution sequence comprises operations to be performed by test steps, and the diagnosis equipment is an equipment included in the vehicle; and
calling a preset interface corresponding to the diagnosis equipment to transmit the test script execution sequence to the diagnosis equipment, to enable the diagnosis equipment to execute the test script execution sequence based on the operations to be performed by the test steps.

6. The method of any one of claims 1 to 5, wherein before executing the target test script based on the preset diagnosis engine, the method further comprises:
receiving condition information on executing a test script configured and sent by the server, wherein the condition information comprises status information items that need to be detected in the vehicle to be diagnosed; and
determining that the status information items in the vehicle to be diagnosed satisfy the condition information.

7. The method of any one of claims 1 to 6, wherein diagnosing the execution result of the target test script based on the preset diagnostic engine comprises:
calling a diagnostic database, wherein the diagnostic database comprises a correspondence between each signaling variable generated by executing each test step of a test script and a respective diagnostic fault; and
analyzing each signaling variable generated by executing each test step based on the diagnostic database, and determining a diagnostic fault of the target test script based on the correspondence.

8. The method of any one of claims 1 to 7, wherein reporting the diagnostic result of the target test script to the server comprises:
generating a reporting configuration file based on the diagnostic result, wherein the diagnostic result comprises at least one of information on an execution process of the test script, information on a record file of execution process data of the test script, or information on an execution result of the test script; and
uploading the reporting configuration file to the server.

9. A remote diagnosis method, applied to a first server side, comprising:
receiving a remote diagnosis request, wherein the remote diagnosis request comprises a vehicle to be diagnosed and diagnosis information of a vehicle to be diagnosed by a second server;
sending a remote control instruction to the vehicle to be diagnosed based on the remote diagnosis request, wherein the remote control instruction is configured to instruct the vehicle to be diagnosed to perform a corresponding diagnosis; and
receiving a diagnostic result sent by the vehicle to be diagnosed.

10. The method of claim 9, wherein the first server comprises an offline server and an aftersales server; and
receiving the remote diagnosis request comprises:
receiving the remote diagnosis request sent, based on an electricity inspection result of the vehicle to be diagnosed, by offline server;
or,
receiving the remote diagnosis request triggered by the aftersales server by calling a preset interface, wherein the aftersales server is configured to diagnose the vehicle to be diagnosed based on a preset condition in accordance with vehicle data of the vehicle to be diagnosed.

11. The method of claim 9 or 10, wherein before sending the remote control instruction to the vehicle to be diagnosed based on the remote diagnosis request, the method further comprises:
generating a test script execution sequence;
determining a diagnosis category to which the test script execution sequence belongs;
generating a test script based on the diagnosis category and the corresponding test script execution sequence; and
storing the test script in a test script collection to remotely synchronize the test script to the vehicle to be diagnosed.

12. The method of any one of claims 9 to 11, wherein the first server also comprises a diagnostic database, and the diagnostic database comprises a correspondence between each signal variable generated by each test step and a respective diagnostic fault, and the method further comprises:
monitoring whether there is an update of the diagnostic database; and
in response to monitoring that there is an update, sending an updated diagnostic database to a preset diagnostic engine in the vehicle to be diagnosed, to enable the preset diagnostic engine to diagnose a test script execution result based on the updated diagnostic database.

13. The method of any one of claims 9 to 12, wherein before sending the remote control instruction to the vehicle to be diagnosed based on the remote diagnosis request, the method further comprises:
configuring condition information on testing the vehicle to be diagnosed, and sending the condition information to the vehicle to be diagnosed, wherein the condition information comprises status information items that need to be detected in the vehicle to be diagnosed; and
based on a received response that the vehicle to be diagnosed does not satisfy the condition information, reconfiguring the condition information, to enable the vehicle to be diagnosed to satisfy the condition information.

14. A remote diagnosis apparatus, applied to a side of vehicle to be diagnosed, comprising:
a first receiving unit, configured to receive a remote control instruction sent by a server, wherein the remote control instruction corresponds to a diagnosis category, and the remote control instruction is configured to instruct the vehicle to be diagnosed to execute a target test script corresponding to the remote control instruction;
an executing unit, configured to execute the target test script based on a preset diagnostic engine;
a diagnosing unit, configured to diagnose an execution result of the target test script based on the preset diagnostic engine; and
a reporting unit, configured to report a diagnostic result of the target test script to the server.

15. A remote diagnosis apparatus, applied to a server side, comprising:
a first receiving unit, configured to receive a remote diagnosis request, wherein the remote diagnosis request comprises a vehicle to be diagnosed and a diagnosis category;
a first sending unit, configured to send a remote control instruction to the vehicle to be diagnosed based on the remote diagnosis request, wherein the remote control instruction is configured to instruct the vehicle to be diagnosed to perform a corresponding diagnosis; and
a second receiving unit, configured to receive a diagnostic result sent by the vehicle to be diagnosed.

16. A remote diagnosis system comprising: a server and a vehicle to be diagnosed, wherein the vehicle to be diagnosed comprises the remote diagnosis apparatus of claim 14, and the server comprises the remote diagnosis apparatus of claim 15.

17. An electronic device, comprising:
at least one processor; and
a memory communicatively coupled to the at least one processor; wherein
the memory stores instructions executable by the at least one processor, and when the instructions are executed by the at least one processor, the at least one processor is caused to perform the method of any one of claims 1 to 8 or the method of any one of claims 9 to 13.

18. A non-transitory computer-readable storage medium having computer instructions stored thereon, wherein the computer instructions are used to cause a computer to perform the method of any one of claims 1 to 8 or the method of any one of claims 9 to 13.

19. A computer program product comprising a computer program, wherein when the computer program is executed by a processor, the method of any one of claims 1 to 8 or the method of any one of claims 9 to 13 is implemented.

20. A computer program comprising computer program codes, wherein when the computer program codes are running by a computer, the computer is caused to implement the method of any one of claims 1 to 8 or the method of any one of claims 9 to 13.
